Europäisches Patentamt

European Patent Office

Office européen des brevets

(19)

(11) Veröffentlichungsnummer: **0 155 987**
**B1**

# EUROPÄISCHE PATENTSCHRIFT

(12)

(45) Veröffentlichungstag der Patentschrift:
**19.11.87**

(51) Int. Cl.⁴: **B 62 D  17/00**

(21) Anmeldenummer: **84109855.1**

(22) Anmeldetag: **18.08.84**

(54) **Dreh- und Einstellwerkzeug für axialsymmetrische Werkstücke, insbesondere für Spurstangen an Kraftfahrzeugen.**

(30) Priorität: **24.03.84  DE 3410912**

(43) Veröffentlichungstag der Anmeldung:
**02.10.85 Patentblatt 85/40**

(45) Bekanntmachung des Hinweises auf die Patenterteilung:
**19.11.87 Patentblatt 87/47**

(84) Benannte Vertragsstaaten:
**CH DE FR GB IT LI NL SE**

(56) Entgegenhaltungen:
**DE - A - 2 644 865**

(73) Patentinhaber: **Wegmann & Co. GmbH,
August-Bode-Strasse 1, D-3500 Kassel (DE)**

(72) Erfinder: **Blume, Harald, Ing. grad.,
Staufenbergstrasse 6, D-3524 Immenhausen 2 (DE)**
Erfinder: **Wagner, Bodo, Dipl.-Ing., Siedlerstrasse 3,
D-3501 Niestetal 1 (DE)**

(74) Vertreter: **Feder, Heinz, Dr. et al, Dominikanerstrasse 37,
D-4000 Düsseldorf 11 (DE)**

## Beschreibung

Die Erfindung betrifft ein Dreh- und Einstellwerkzeug für axialsymmetrische Werkstücke, insbesondere für Spurstangen an Kraftfahrzeugen, mit einem Gehäuse, das eine Aussparung zum Einlegen des Werkstückes aufweist und in dem eine kraftbetriebene, am Umfang des Werkstückes angreifende, um die Längsachse des Werkstückes drehbare Klemmvorrichtung angeordnet ist.

Als axialsymmetrische Werkstücke kommen insbesondere Rohre oder Stangen mit zylindrischer Mantelfläche in Frage, die um ihre Längsachse, beispielsweise zu Einstellzwecken, verdreht werden sollen, wobei davon ausgegangen wird, dass die Enden des zu drehenden Rohres oder der Stange nicht zugänglich sind. Das Werkstück muss also an einer beliebigen zugänglichen Stelle erfasst und gedreht werden. Dabei kann nicht angenommen werden, dass die Stelle besonders bearbeitet ist oder eine besondere Struktur für ein formschlüssiges Ergreifen des Werkstückes aufweist.

Unrundheiten, Toleranzen im Querschnitt und Oberflächenrauhigkeiten, wie z.B. bei Gussteilen üblich sind, sollen den Einstellvorgang in keiner Weise beeinträchtigen. Weiterhin soll es möglich sein, auch Werkstücke mit anderen Querschnitten, z.B. oval oder vieleckig, sicher zu erfassen.

Um auch hohe Drehmomente sicher zu übertragen, muss eine einwandfreie Verbindung zwischen dem Werkstück und dem Werkzeug hergestellt werden.

Ein automatisches Verdrehen des Werkstückes erfordert weiterhin einen steuerbaren Antrieb, welcher Signalen, die beispielsweisen von einem Messsystem erzeugt werden, so folgt, dass das Werkzeug in einen teil- oder vollautomatisch ablaufenden Prozess, z.B. in der Fertigung, integrierbar ist. Ausserdem soll eine manuelle Bedienung des Werkzeuges möglich sein.

Eine besonders wichtige Anwendung eines Dreh- und Einstellwerkzeuges, bei dem die obengenannten Anforderungen auftreten, ist das Einstellen der Spurstangen von Kraftfahrzeugen.

Es ist ein Dreh- und Einstellwerkzeug der eingangs genannten Art bekannt (DE-A-26 44 865), bei dem die drehbare Klemmvorrichtung drei an das Werkstück anpressbare Andruckrollen aufweist, von denen mindestens eine antreibbar ist. Dieses bekannte Dreh- und Einstellwerkzeug hat den Nachteil, dass die übertragbaren Drehmomente selbst bei grossen Andruckkräften relativ gering und bei den vorhandenen Unebenheiten in der Oberfläche des Werkstückes nicht ausreichend sind.

Die der Erfindung zugrunde liegende Aufgabe bestand darin, ein Dreh- und Einstellwerkzeug der eingangs und im Oberbegriff des Patentanspruchs 1 beschriebenen Bauart so auszubilden, dass alle der eingangs genannten Anforderungen in optimaler Weise erfüllt sind und mit dem insbesondere auch bei ungünstiger Oberflächenbeschaffenheit des Werkstückes sehr hohe Drehmomente sicher und mit präziser Voreinstellung übertragen werden können, ohne dass die Oberfläche beschädigt wird. Weiterhin sollte erreicht werden, dass das Werkstück beim Spannen im Werkzeug automatisch zentriert wird und es sollten auch Werkstücke mit verschiedenen Querschnitten sicher gefasst werden können.

Die Lösung dieser Aufgabe erfolgt erfindungsgemäss mit den Merkmalen aus dem kennzeichnenden Teil des Patentanspruchs 1.

Vorteilhafte Ausführungsformen das erfindungsgemässen Werkzeuges sind in den Unteransprüchen beschrieben.

Das weiter unten anhand eines Ausführungsbeispieles ausführlich beschriebene Dreh- und Einstellwerkzeug arbeitet nach folgendem Grundprinzip:

Die in der Klemmvorrichtung angeordnete Zahnscheibe sowie die Lagerscheiben werden so eingestellt, dass der Durchtrittsschlitz bzw. die Eintrittsschlitze parallel zur Aussparung im Gehäuse verlaufen. In dieser Stellung kann das Werkzeug über das Werkstück, beispielsweise die Spurstange eines Kraftfahrzeuges, geschoben werden. Ist dies erfolgt so wird der Antrieb des Werkzeuges in Betrieb gesetzt, wodurch infolge einer Drehung der Zahnscheibe die innerhalb der Zahnscheibe angeordneten Spannrollen nach innen geführt und an das Werkstück angedrückt werden, so dass das Werkstück zwischen den drei Spannrollen festgeklemmt wird. Ein weiteres Drehen der Zahnscheibe bewirkt, dass die Spannrollen das Werkstück um seine Längsachse mitdrehen. Die Klemmung erfolgt automatisch um so kräftiger je grösser das zum Drehen des Werkstückes erforderliche Drehmoment ist. Eine Umkehr der Drehrichtung löst die Klemmung. Sie kann nach Belieben für die entgegengesetzte Drehrichtung erneut erfolgen.

Im folgenden wird anhand der beigefügten Zeichnungen ein Ausführungsbeispiel für das erfindungsgemässe Dreh- und Einstellwerkzeug näher beschrieben.

In den Zeichnungen zeigen:

Figur 1 eine Ausführungsform eines Dreh- und Einstellwerkzeuges in einer Seitenansicht in Richtung I in Figur 2 bei abgenommenem Gehäusedeckel;

Figur 2 einen Schnitt nach der Linie II-II in Figur 1;

Figur 3 in einer Seitenansicht eine Lagerscheibe des Werkzeuges nach Figur 1 und 2;

Figur 4 das Werkzeug in einer Seitenansicht in Pfeilrichtung I aus Figur 2 bei aufgesetztem Gehäusedeckel.

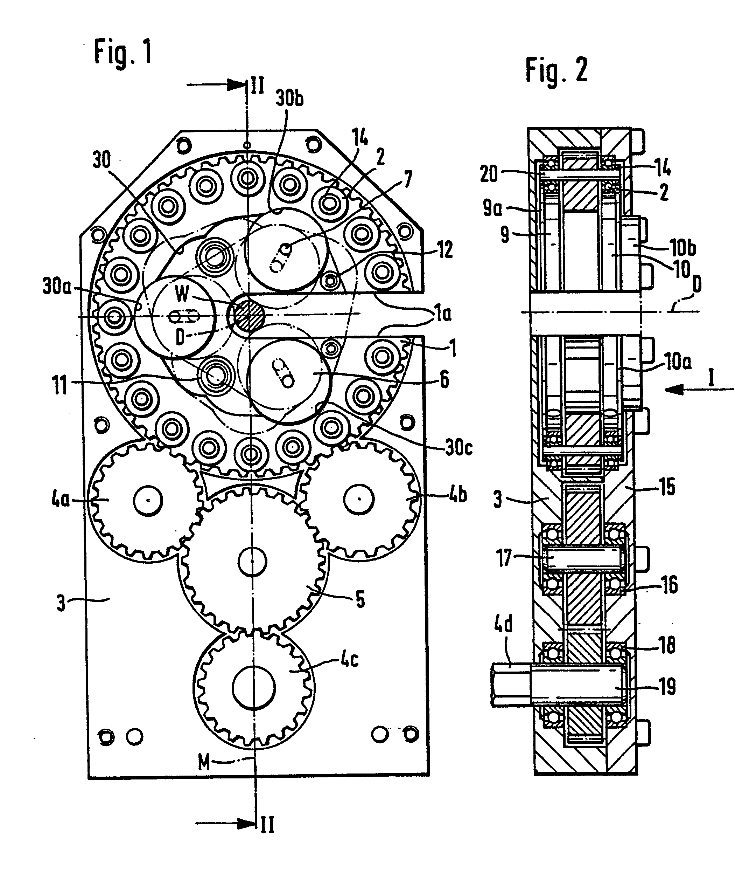

Das in den Figuren 1 bis 4 dargestellte Dreh- und Einstellwerkzeug besitzt ein flaches Gehäuse 3, das an einer Breitseite mit einem Deckel 15 verschliessbar ist und das an einer Schmalseite eine von aussen nach innen bis über die Mitte hinaus geführte Aussparung 3a zum Einführen eines Werkstückes W aufweist. Im Gehäuse 3 ist eine Zahnscheibe 1 drehbar angeordnet, die einen um ihre Drehachse D herum angeordneten freien Innenraum besitzt sowie einen vom Aussenraum in diesen Innenraum hindurchgeführten Durchtrittsschlitz 1a zum Einführen des Werkstückes W.

Da wegen des freien Innenraumes die Zahnscheibe 1 in ihrer Mitte nicht mit einer festen Drehachse verbunden werden kann, ist sie in der Nähe ihres Umfanges am Gehäuse geführt. Zu diesem Zweck sind zu beiden Seiten der Zahnscheibe 1 in Umfangsnähe Kugellager 2 in einem Kranz angeordnet, die an der Innenwand der die Zahnscheibe 1 aufnehmenden Ausnehmung in Gehäuse 3 abrollen. Der Antrieb der Zahnscheibe 1 erfolgt über zwei am Umfang der Zahnscheibe 1 angeordnete Zahnräder 4a und 4b, die über ein gemeinsames Zahnrad 5 von einem Antriebszahnrad 4c aus angetrieben werden. Das Antriebszahnrad 4c kann in nicht eigens dargestellter Weise über einen Sechskant 4d mit einer Antriebsvorrichtung verbunden sein. Die beiden Zahnräder 4a und 4b sind deshalb erforderlich, weil die Zahnscheibe 1 den Durchtrittsschlitz 1a besitzt, der beim Passieren nur eines Zahnrades die Kraftübertragung an dieser Stelle unterbrechen würde. Bei der dargestellten Ausführungsform befindet sich also immer eines der Zahnräder 4a oder 4b im Eingriff mit der Zahnscheibe 1.

Der um die Drehachse D der Zahnscheibe 1 herum angeordnete Innenraum ist von einer Kurvenfläche 30 begrenzt. Wie aus Figur 1 ersichtlich, hat diese Kurvenfläche 30 einen solchen Verlauf, dass bei einem Umlauf um die Kurvenfläche 30 der Abstand der Kurvenfläche von der Drehachse D sich zwischen einem Maximalwert und einem Minimalwert mehrere Male verändert. Dabei sind drei im Winkelabstand von 120° angeordnete Bereiche 30a, 30b, und 30c vorgesehen, in denen dieser Abstand einen Maximalwert aufweist. Zwischen diesen Bereichen befinden sich Bereiche, in denen der Abstand der Kurvenfläche 30 von der Drehachse D stetig abnimmt bis zu einem Minimalwert, der zwischen jeweils zwei Maximalwerten liegt. Im Innenraum der Zahnscheibe 1 sind drei Spannrollen in Winkelabständen von 120° gegeneinander angeordnet, deren Drehachsen 7 parallel zur Drehachse D der Zahnscheibe 1 liegen und die mit ihrer Oberfläche an radial nach aussen weisenden Punkten auf der Kurvenfläche 30 bei einer Drehung der Zahnscheibe 1 abrollen können. Die Drehachsen 7 der Spannrollen 6 sind in weiter unten erläuterter Weise in radialer Richtung verschiebbar geführt. Dies hat zur Folge, dass bei einer Drehung der Zahnscheibe 1 die Spannrollen 6 beim Abrollen auf der Kurvenfläche 30 radial verschoben werden. Geht man von einer Ausgangsstellung aus, wie sie in Figur 1 mit ausgezogenen Linien dargestellt ist, in der die Spannrollen 6 die Kurvenfläche 30 in den Bereichen 30a bis 30c, also mit grösstmöglichem Abstand von der Drehachse D der Zahnscheibe 1 berühren, so werden die Spannrollen 6 bei einer Drehung der Zahnscheibe radial nach innen in Richtung auf die Drehachse D der Zahnscheibe 1 und damit in Richtung auf das Werkstück W verschoben. Der Abrollvorgang der Spannrollen 6 auf der Kurvenfläche 30 ist jeweils dann beendet, wenn alle drei Spannrollen 6 das Werkstück W berühren. Die Funktionsweise ist also ähnlich dem Freilaufprinzip. Geht man von der in Figur 1 dargestellten Ausgangsposition aus, so erfolgt die Verschiebung der Spannrollen 6 nach innen jeweils in beiden Drehrichtungen der Zahnscheibe 1.

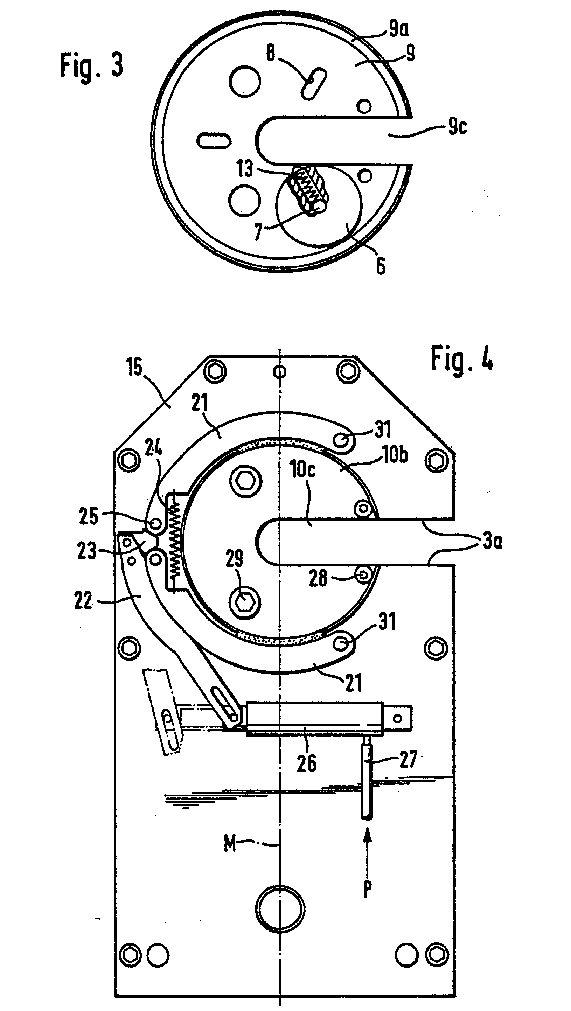

Um diese Verschiebung der Spannrollen 6 zu ermöglichen, sind die Drehachsen 7 der Spannrollen 6 in Langlöchern 8 verschiebbar geführt, die in zwei Lagerscheiben 9 und 10 in der aus Figur 3 ersichtlichen Weise eingearbeitet sind. Die Lagerscheiben 9 und 10 sind zu beiden Seiten der Zahnscheibe 1 und koaxial zu ihr angeordnet. Beide Lagerscheiben 9 und 10 sind über durch den Innenraum der Zahnscheibe i hindurchgeführte Abstandshalter 11 und 12 und mit Zylinderschrauben 28 und 29 fest miteinander verbunden. Zur Einführung des Werkstückes W weisen sie einen sich von ihrer Aussenseite bis über ihre Mitte hinaus erstreckenden Eintrittsschlitz 9c bzw. 10 c auf. Die Lagerscheiben 9 und 10 sind gegen das Gehäuse und gegen die Zahnscheibe 1 um die Achse D verdrehbar. Zu diesem Zweck sind, wie aus Figur 2 ersichtlich, die Lagerscheiben 9 und 10 jeweils an ihrer Aussenseite mit Ansätzen 9a und 10a versehen, deren Durchmesser grösser ist als der Durchmesser der Lagerscheibe. Am Umfang dieser Ansätze 9a, 10a rollen Kugellager 14 ab, die gleichachsig mit den Kugellagern 2 im Kranz an der Zahnscheibe 1 angeordnet sind.

Durch Druckfedern 13 werden die in den Langlöchern 8 der Lagerscheiben 9 und 10 geführten Drehachsen 7 der Spannrollen 6 (s. Fig. 3) ständig nach aussen gedrückt. Das oben beschriebene Abrollen der Spannrollen 6 auf der Kurvenfläche 30 der Zahnscheibe 1 wird dadurch bewirkt, dass beim Drehen der Zahnscheibe i relativ zu den Lagerscheiben 9 und 10 durch die Druckfedern 13 die Spannrollen 6 an die Kurvenfläche 30 angedrückt werden. Die Lagerscheiben 9 und 10 werden bei dieser Bewegung durch eine Bremsvorrichtung festgehalten.

Die zur Bremsung der Lagerscheiben 9 und 10 erforderliche Bremsvorrichtung ist in Figur 4 dargestellt. In Figur 2 ist die an der Aussenseite des Gehäusedeckels 15 angeordnete Bremsvorrichtung der besseren Übersichtlichkeit wegen weggelassen.

Die Lagerschiebe 10 weist an ihrer Aussenseite einen weiteren, mit ihr fest verbundenen Ansatz 10b auf, dessen Durchmesser kleiner ist als der Durchmesser der Lagerscheibe 10 und der durch eine Öffnung im Gehäusedeckel 15 nach aussen geführt ist. Am Umfang dieses Ansatzes 10b greift die Bremsvorrichtung in der aus Figur 4 ersichtlichen Weise an. Die als Backenbremse ausgebildete Bremsvorrichtung besitzt zwei Bremsbacken 21, die um Achsen 31 schwenkbar sind und mittels einer zwischen ihnen angeordneten Zugfeder 24 an den Umfang des Ansatzes 10b angedrückt werden. Am freien Ende der Bremsbacken 21 sind Rollen 25 angeordnet, zwischen die ein Keil 23 geführt ist, der am Ende eines Bremshebels 22 sitzt, welcher von einem Pneumatikzylinder 26 betätigbar ist, der über eine Leitung 27 mit Druckluft versorgt wird. Bei Betätigen des Druckluftzylinders wird der Keil 23 zwischen die Rollen 25 gedrückt und damit die Bremsvorrichtung gelöst. Je nachdem, ob bei einer Verdrehung der Zahnscheibe 1 die Bremsvorrichtung mehr oder weniger angezogen oder gelöst ist, werden die Lagerscheiben 9 und 10 festgehalten oder von der Zahnscheibe 1 über die Spannrollen 6 mitgenommen. Nach dem oben beschriebenen Anlegen der Spannrollen 6 an das Werkstück W können die Lagerscheiben 9 und 10 zunächst gegen die Bremse gedreht werden. Das benötigte Bremsmoment ist dabei klein und belastet den Antrieb nur unwesentlich. Sobald die Spannrollen 6 fest am Werkstück W anliegen, kann die Bremse gelöst werden. Die Klemmung öffnet sich hierdurch nicht. Die Klemmung löst sich erst bei Umkehr der Drehrichtung der Zahnscheibe 1. Durch die Druckfe-

dern 13, welche die Spannrollen 6 nach aussen drücken, stellen sich dann die Lagerscheiben 9 und 10 selbsttätig in ihre Ausgangsposition, bezogen auf die Zahnscheibe 1, zurück.

Bei durch die Spannrollen 6 festgeklemmtem Werkstück W kann dieses bei gelöster Bremsvorrichtung in beliebiger Weise um Winkel, die ein Mehrfaches von 360° betragen, verdreht und damit eingestellt werden.

Soll die Drehrichtung des Werkstückes W umgekehrt werden, wird die Bremsvorrichtung betätigt und die Antriebsrichtung umgekehrt. Dabei erfolgt ein kurzzeitiges Lösen der Klemmung und ein erneutes Spannen in entgegengesetzter Richtung.

Das Werkzeug kann vom Werkstück W nur in der Stellung abgenommen bzw. eingehängt werden, in der der Durchtrittsschlitz la der Zahnscheibe 1, die Eintrittsschlitze 9c und 10c der Lagerscheiben 9 und 10 sowie die Aussparung 3a im Gehäuse 3 parallel ausgerichtet sind. Wenn also das Werkstück seine gewünschte Endposition erreicht hat, so ist die Klemmung durch Umkehrung der Drehrichtung zu lösen, ohne dass dabei die Bremse betätigt wird. Es erfolgt somit keine erneute Klemmung. Die Zahnscheibe 1 ist dann zusammen mit den Lagerscheiben 9 und 10 solange zu drehen, bis die oben erwähnten Eintritts- und Durchtrittsschlitze in ihrer Lage übereinstimmen.

Bei einem motorischen Antrieb der Zahnscheibe 1 über die Antriebszahnräder 4c, 5, 4a und 4b können geeignete Sensoren vorgesehen sein, durch deren Signale der Motor so gesteuert wird, dass das Werkzeug in die geöffnete Stellung gebracht und dort angehalten wird. Als Sensoren eignen sich beispielsweise Hall-Generatoren und Permanent-Magnete. Die Magnete können in nicht dargestellter Weise am Umfang der Zahnscheibe 1 angeordnet sein. Eine etwa dadurch erforderliche Unterbrechung der Verzahnung der Zahnscheibe 1 hat keinen Einfluss auf ihre Funktion, da die Zahnscheibe 1 an zwei Stellen angetrieben wird. Es muss lediglich darauf geachtet werden, dass der Magnet zum Durchtrittsschlitz la der Zahnscheibe 1 nicht einen solchen Abstand hat, dass die Unterbrechungen der Verzahnungen beim Durchtrittsschlitz und beim Magneten gleichzeitig vor die beiden Antriebszahnräder 4a und 4b zu liegen kommen. Der die Signale abgebende Hall-Generator ist dann an entsprechender Stelle in geringem Abstand von der Zahnscheibe 1 anzuordnen. In Figur 1 ist die Öffnungs- und Ausgangsstellung des Werkzeuges in durchgezogenen Linien dargestellt, während die Klemmstellung in strichpunktierten Linien angedeutet ist.

## Patentansprüche

1. Dreh- und Einstellwerkzeug für axialsymmetrische Werkstücke, insbesondere für Spurstangen an Kraftfahrzeugen, mit einem Gehäuse (3, 15), das eine Aussparung (3a) zum Einlegen des Werkstückes aufweist und in dem eine kraftbetriebene, am Umfang des Werkstückes angreifende, um die Längsachse des Werkstückes drehbare Klemmvorrichtung angeordnet ist, dadurch gekennzeichnet, dass die Klemmvorrichtung eine an ihrem Umfang angetriebene und im Gehäuse (3, 15) geführte drehbare Zahnscheibe (1) aufweist, die einen durch einen Durchtrittsschlitz (1a) mit dem Aussenraum verbundenen, um die Drehachse (D) herum angeordneten freien Innenraum besitzt, der von einer Kurvenfläche (30) begrenzt ist, deren Abstand von der Drehachse (D) bei einem Umlauf zwischen einem Maximalwert und einem Minimalwert variiert, wobei auf der Kurvenfläche (30) in Winkelabständen von 120° drei Bereiche (30a, 30b, 30c) mit dem gleichen Maximalwert vorhanden sind und im Innenraum der Zahnscheibe (1) in Winkelabständen von 120° drei Spannrollen (6) angeordnet sind, die mit ihrem Umfang jeweils an der Kurvenfläche (30) geführt sind und deren parallel zur Drehachse (D) der Zahnscheibe (1) stehende Drehachsen (7) radial zur Drehachse (D) der Kurvenscheibe (1) in Langlöchern (8) verschiebbar geführt sind, welche in zu beiden Seiten der Zahnscheibe (1) und koaxial zu ihr angeordneten, gegen das Gehäuse (3, 15) und gegen die Zahnscheibe (1) gemeinsam verdrehbaren, mit ihrem Umfang am Gehäuse (3, 15) geführten, jeweils einen sich von ihrer Aussenseite bis über ihre Drehachse (D) erstreckenden Eintrittsschlitz (9c, 10c) aufweisenden Lagerscheiben (9, 10) angeordnet sind und die Spannrollen (6) durch Federn (13) radial an die Kurvenfläche (30) angedrückt werden und dass an mindestens einer der Lagerscheiben (10) eine lösbare Bremsvorrichtung (21) angeordnet ist.

2. Werkzeug nach Anspruch 1, dadurch gekennzeichnet, dass die Zahnscheibe (1) an zwei gegeneinander winkelversetzten Stellen ihres Umfangs über ein Zahnradgetriebe (4a, 4b, 5) angetrieben ist.

3. Werkzeug nach Anspruch 1 oder 2, dadurch gekennzeichnet, dass die Zahnscheibe (1) über einen in Umfangsnähe angeordneten Kranz von Kugellagern (2) am Gehäuse (3, 15) geführt ist.

4. Werkzeug nach einem der Ansprüche 1 bis 3, dadurch gekennzeichnet, dass die Kurvenfläche (30) zwischen je zwei Bereichen (30a, 30b, 30c) mit Maximalwert des Abstandes von der Drehachse (D) der Zahnscheibe (1) einen Minimalwert dieses Abstandes besitzt und der Abstand von beiden Maximalwerten zum Minimalwert hin stetig abnimmt.

5. Werkzeug nach einem der Ansprüche 1 bis 4, dadurch gekennzeichnet, dass die Lagerscheiben (9, 10) jeweils an einem am Umfang der Zahnscheibe (1) angeordneten Kranz von Kugellagern (14) geführt sind.

6. Werkzeug nach einem der Ansprüche 1 bis 5, dadurch gekennzeichnet, dass die Lagerscheiben (9, 10) über durch den Innenraum der Zahnscheibe (1) geführte Abstandshalter (11, 12) gegeneinander unverdrehbar miteinander verbunden sind.

7. Werkzeug nach einem der Ansprüche 1 bis 6, dadurch gekennzeichnet, dass eine der beiden Lagerscheiben (10) einen Ansatz (10b) aufweist, an dessen Umfang die Bremsvorrichtung (21) angreift.

8. Werkzeug nach Anspruch 7, dadurch gekennzeichnet, dass die Bremsvorrichtung als Backenbremse ausgebildet ist, mit zwei den Umfang des Ansatzes (10b) umfassenden schwenkbaren Bremsbacken (21), die durch Kraft einer Feder (24) angedrückt werden und durch einen Keil (23) auseinanderdrückbar sind, der am Ende eines von einem Pneumatikzylinder (26) betätigten Bremshebels (22) angeordnet ist.

## Claims

1. Rotation and adjustement tool for axially symmetric work pieces, particularly steering tie-rods of motor vehicles, comprising a housing (3, 15) provided with a recess (3a) for inserting the work piece, and having arranged therein a power-driven clamping device acting on the circumference of the work piece and being rotatable about the longitudianal axis thereof, characterized in that the clamping device comprises a rotatable toothed disc (1) which is rotatable received in the housing (3, 15) and is driven at its circumference, said toothed disc (1) having a free interior space connected with the environment through a slot (1a) and being arranged around the axis of rotation of said disc, the interior space of the disc being limited by a curved surface (30) having a distance from the axis of rotation varying between a maximum and a minimum value upon one revolution of the disc, whereby the curved surface (30) comprises three portions (30a, 30b, 30c) having the same maximum value and being arranged at angular distances of 120° each, and whereby in the interior space of the toothed disc (1), three tension rollers (6) are arranged at angular distances of 120° each, the outer surfaces of said tension rollers (6) being guided on the curved surface (30), and the axes (7) of said tension rollers which are directed parallel to the axis of rotation (D) of the toothed disc (1), being slidably guided in radial direction in slotted holes (8) arranged in bearing discs (9, 10) which bearing discs are coaxially arranged on both sides of the toothed disc (1) and are commonly rotatable relatively to the housing (3, 15) and the toothed disc (1), and which, at their outer surface, are guided on the housing (3, 15) and are provided with an entry slot (9c, 10c) extending from the outer surface to beyond the axis of rotation (D) thereof, that the tension rollers (6) are radially urged against the curved surface (30) by means of springs (13), and that a releasable braking device (21) is provided at least at one of the bearing discs (10).

2. Tool as claimed in claim 1, characterized in that the toothed disc (1) is driven through a gearing (4a, 4b, 5) at two positions of its circumference which are angularly displaced relatively to one another.

3. Tool as claimed in claim 1 or 2, characterized in that the toothed disc (1) is guided on the housing (3, 15) by means of ball bearings (2) which are arranged in a circle near the circumference of said disc (1).

4. Tool as claimed in one of claims 1 to 3, characterized in that the curved surface (30), between two portions of maximum value (30a, 30b, 30c) of the distance from the axis of rotation (D) of the toothed disc (1) presents a minimum value of this distance, and that the distance of both maximum values gradually decreases to the minimum value.

5. Tool as claimed in one of claims 1 to 4, characterized in that the bearing (9, 10) are each guided on ball bearings (14) arranged in a circle near the circumference of the toothed disc (1).

6. Tool as claimed in one of claims 1 to 5, characterized in that the bearing discs (9, 10) are positively connected to one another by means of spacer pieces (11, 12) passing through the interior space of the toothed disc (1).

7. Tool as claimed in one of claims 1 to 6, characterized in that one of the two bearing discs (10) comprises a projection (10b) on the circumference of which the braking device (21) acts upon.

8. Tool as claimed in claim 7, characterized in that the braking device is formed as a shoe brake having two pivotable brake shoes (21) embracing the projection (10b), said brake shoes (21) being adapted to be urged together by a spring (24) and to be urged apart by a wedge (23) which is provided at the end of a brake lever (22) actuated by a pneumatic cylinder (26).

## Revendications

1. Outil pour tourner et régler en rotation des pièces axisymétriques, en particulier des barres d'accouplement sur des véhicules automobiles, possédant un corps (3, 15) qui présente un évidement (3a) pour l'insertion de la pièce et dans lequel est logé un dispositif de serrage qui peut être tourné mécaniquement autour de l'axe longitudianal de la pièce et qui attaque la pièce à la périphérie de celle-ci, caractérisé en ce que le dispositif de serrage comprend un disque denté (1) rotatif, guidé dans le corps (3, 15) et entraîné à sa périphérie, qui présente un espace interne libre, agencé autour de l'axe de rotation (D) et communiquant par une fente de passage (1a) avec l'extérieur, espace qui est délimité par une surface formant un profil de came (30) dont la distance de l'axe de rotation (d) varie entre une valeur maximale et une valeur minimale sur un tour, le profil de came (30) présentant trois zones (30a, 30b, 30c) angulairement espacées de 120° et ayant la même valeur maximale, l'espace interne du disque denté (1) contenant trois galets de serrage (6) qui sont mutuellement espacés angulairement de 120°, sont chacun guidés par leur pourtour sur le profil de came (30) et sont montés rotatifs sur des axes (7) qui sont parallèles à l'axe de rotation (D) du disque denté (1), les axes (7) des galets étant disposés mobiles et étant guidés radialement par rapport à l'axe de rotation (D) du disque (1) dans des trous oblongs (8), trous qui sont ménagés dans deux flasques discoïdes (9, 10) disposées de part et d'autre du disque denté (1), sur le même axe que celui-ci, les flasques (9, 10) étant guidés par leur périphérie sur le corps (3, 15) et pouvant être tournés conjointement par rapport au disque denté (1), chacun des flasques présentant une fente d'entrée (9c, 10c) s'étendant depuis son bord extérieur jusqu'au-delà de son axe de rotation (D), les galets de serrage (6) étant pressés radialement contre le profil de came (30) par des ressorts (13), et qu'un dispositif de freinage (21), pouvant être desserré, est installé sur l'un au moins des flasques (10).

2. Outil selon la revendication 1, caractérisé en ce que le disque denté (1) est entraîné, par l'intermédiaire d'un engrenage (4a, 4b, 5), à deux endroits mutuellement décalés angulairement de sa périphérie.

3. Outil selon la revendication 1 ou 2, caractérisé en ce que le disque denté (1) est guidé sur le corps (3, 15) avec interposition d'une couronne de roulements à billes (2) disposée à proximité de la périphérie du disque.

4. Outil selon une des revendications 1 à 3, caractérisé en ce que le profil de came (30) présente, entre chaque paire des zones (30a, 30b, 30c) ayant la valeur maximale de la distance de l'axe de rotation (D) du disque denté (1), une valeur minimale de cette distance, et que la distance par rapport à cet axe diminue continûment à partir des deux valeurs maximales vers la valeur minimale.

5. Outil selon une des revendications 1 à 4, caractérisé en ce que les flasques (9, 10) sont guidés chacun sur une couronne de roulements à billes (14) disposée à la périphérie du disque denté (1).

6. Outil selon une des revendications 1 à 5, caractérisé en ce que les flasques (9, 10) son reliés entre eux, sans pouvoir tourner l'un par rapport à l'autre, par des entretoises (11, 12) qui traversent l'espace interne du disque denté (1).

7. Outil selon une des revendications 1 à 6, caractérisé en ce que l'un des deux flasques (10) présente une saillie (10b) dont le pourtour est attaqué par un dispositif de freinage (21).

8. Outil selon la revendication 7, caractérisé en ce que le dispositif de freinage est réalisé comme un frein à mâchoires, comportant deux mâchoires (21) montées pivotantes et entourant le pourtour de la saillie (10b), les mâchoires étant pressées contre ce pourtour par la force d'un ressort (24) et pouvant être écartées l'une de l'autre par un coin (23) porté à l'extrémité d'un levier de frein (22) commandé par un vérin pneumatique (26).

Fig. 1

Fig. 2

**Fig. 3**

**Fig. 4**